# EUROPÄISCHE PATENTSCHRIFT

(11) **EP 1 226 647 B1**
(45) Veröffentlichungstag und Bekanntmachung des Hinweises auf die Patenterteilung: **05.11.2003**
(21) Anmeldenummer: 00943605.6
(22) Anmeldetag: 17.05.2000
(51) Int. Cl.: H02M 3/158, H02P 6/08

(54) **VERFAHREN ZUM ANSTEUERN MINDESTENS EINES INDUKTIVEN VERBRAUCHERS MITTELS PULSWEITENMODULIERTER STEUERSIGNALE**
METHOD FOR CONTROLLING AT LEAST ONE INDUCTIVE CONSUMER BY MEANS OF A PULSE WIDTH MODULATED CONTROL SIGNAL
PROCEDE POUR COMMANDER AU MOINS UN CONSOMMATEUR INDUCTIF AU MOYEN DE SIGNAUX DE COMMANDE A MODULATION D'IMPULSIONS EN DUREE

(30) Priorität: 19.05.1999 DE 19922977
(43) Veröffentlichungstag der Anmeldung: 31.07.2002
(73) Patentinhaber: ROBERT BOSCH GMBH, 70442 Stuttgart (DE)
(72) Erfinder: WITZIG, Harald, D-77830 Buehlertal (DE); KNECHT, Gerhard, D-76473 Iffezheim (DE); HEESE, Thomas, D-77815 Buehl (DE)
(86) Internationale Anmeldenummer: DE0001538
(87) Internationale Veröffentlichungsnummer: WO00070738

(56) Entgegenhaltungen:
- EP-A- 0 911 956
- DE-A- 2 451 477
- PATENT ABSTRACTS OF JAPAN vol. 008, no. 226 (E-272), 17. Oktober 1984 (1984-10-17) & JP 59 106897 A (YASUKAWA DENKI SEISAKUSHO KK), 20. Juni 1984 (1984-06-20)

## Beschreibung

### Stand der Technik

Die Erfindung betrifft ein Verfahren zum Ansteuern mindestens eines induktiven Verbrauchers mittels pulsweitenmodulierter Steuersignale einer Halbleiter-Endstufe den Verbraucher an eine Versorgungsgleichspannung an- und abschalten.

Es ist bekannt, dass in elektrischen oder elektronischen Schaltungen elektrische Verbraucher mit pulsweitenmodulierten Steuersignalen angesteuert werden können. Dabei wird entsprechend dem Tastverhältnis (Steuerimpuls zu Pulspause) der elektrische Verbraucher über einen Halbleiterschalter mit einer Spannungsquelle verbunden bzw. von dieser getrennt.

Sind in einer Schaltung, z.B. bei getakteten Endstufen von Elektromotoren in einem Kraftfahrzeug, mehrere Verbraucher angeschlossen, die mit einem pulsweitenmodulierten Steuersignal mit angesteuert werden, dann ergeben sich hohe Einschalt- und Ausschaltstromstöße, die zu einer auf der Versorgungsgleichspannung überlagerten Wechselspannung führen. Dies kann auch schon auftreten, wenn große Verbraucherströme geschaltet werden und die Versorgungsgleichspannung nicht leistungsstark genug ist, was bei Batterien als Bordnetz bei Kraftfahrzeugen in der Regel der Fall ist. Diese der VersorgungsgleichspannungüberlagerteWechselspannungbeeinträchtigtdie Funktion aller an der Versorgungsgleichspannung angeschlossenen Verbraucher.

Wie die DE 197 25 708 A1 und die WO 88/10367 zeigen, ist auch schon ein Verfahren zum Ansteuern von elektrischen Verbrauchern bekannt, bei dem beim Schalten relativ großer Lasten diese zeitversetzt derart ein- und ausschaltbar sind, dass der Strom beim Ein- und Ausschalten im wesentlichen kontinuierlich ansteigt und abfällt. Dadurch läßt sich die Ausbildung einer auf der Versorgungsgleichspannung überlagerten Wechselspannung nur abschwächen, jedoch praktisch nicht verhindern, insbesondere wenn es sich um induktive Verbraucher handelt, die blockweise bestromt werden, wie es bei pulsweitenmodulierten elektronisch kommutierbaren Motoren der Fall ist.

Die Ansteuerung einer Erregerwicklung eines derartigen Motors erfolgt in der Regel über eine Schaltung, bestehend aus zwei Halbleiterschaltern und zwei Dioden. Parallel zur Versorgungsgleichspannung ist ein Kondensator geschaltet, der nach dem Abschalten die in der Erregerwicklung gespeicherte magnetische Energie teilweise aufnimmt. Dieser Kondensator bildet mit der Zuleitungsinduktivität einen Schwingkreis. Beim Betrieb des Motors werden die Erregerwicklungen nacheinander bestromt, wobei durch Takten der Halbleiterschalter eine Strombegrenzung erreicht wird. Durch die in der Erregerwicklung gespeicherte magnetische Energie fließt der Motorstrom dann im Freilaufkreis weiter, so dass kein weiterer Strom aus der Versorgungsgleichspannung aufgenommen wird. Dieses "harte" Ein- und Ausschalten bewirkt, dass sich der Strom in der Zuleitung und der Versorgungsgleichspannung sehr schnell und gepulst ändert, was sich, u.a. bedingt durch den vorher erwähnten Schwingkreis, in der Ausbildung einer der Versorgungsgleichspannung überlagerten Wechselspannung auswirkt.

Dokument DE-A-2 451 477 offenbart eine Schutzbeschaltung mit zwei schaltern, bei der die zwei schalter synchron ein-und ausgeschaltet worden sind.

Es ist Aufgabe der Erfindung, ein Verfahren zum Ansteuern eines induktiven Verbrauchers mittels pulsweitenmodulierter Steuersignale der eingangs erwähnten Art zu schaffen, das auf einfache Weise und wenig Aufwand die Ausbildung einer der Versorgungsgleichspannung überlagerten Wechselspannung verhindert bzw. die Amplitude dieser Wechselspannung möglichst klein hält.

Diese Aufgabe wird nach der Erfindung dadurch gelöst, dass der von der PWM-Steuereinheit gesteuerte Halbleiterschalter in den Pulspausen der PWM-Steuersignale einen von der Versorgungsgleichspannung gespeisten Ladestromkreis für den Speicherkondensator und/oder die Speicherinduktivität einschaltet.

Bei dieser Ansteuerung wird die Versorgungsgleichspannung in den Pulspausen durch den Ladestrom des Speicher-Kondensators und/oder der Speicherinduktivität zusätzlich belastet, so dass in Abhängigkeit von der Leistungsaufnahme an der Versorgungsgleichspannung nur langsame Stromänderungen auftreten können, die eine Beeinflussung anderer, an der Versorgungsgleichspannung angeschlossener Verbraucher nicht erfolgen kann.

Dabei kann sich der Ladestromkreis jeweils über den Anfang und das Ende der Pulspausen hinaus teilweise in die anschließenden Steuerimpulse der PWM-Steuersignale erstrecken. Dies bringt einen verbesserten Belastungsausgleich der Versorgungsgleichspannung.

Die Anpassung des Ladestromkreises kann nach einer Ausgestaltung so vorgenommen werden, dass der Ladestromkreis einen Ladestrom aufnimmt, der an den Strom des Verbrauchers so angepaßt wird, dass sich über den PWM-Betrieb ein annähernd gleichbleibender Strombedarf aus der Versorgungsgleichspannung ergibt.

Wird das Verfahren auf elektronisch kommutierte Motoren übertragen, dann kann nach einer Ausgestaltung vorgesehen werden, dass bei einem elektronisch kommutierbaren Motor allen Halbleiter-Endstufen mit den als Erregerwicklungen ausgebildeten Verbrauchern eine gemeinsame Zusatzeinrichtung mit einem Speicherkondensator und/oder einer Speicherinduktivität zugeordnet ist, dessen Halbleiterschalter in allen Pulspausen aller PWM-Steuersignale der PWM-Steuereinheit den Ladestromkreis einschaltet. Die Ansteuerung erfolgt dabei so, dass die gemeiname Zusatzeinrichtung eine Speicherinduktivität aufweist, die wie die Halbleiter-Endstufen und die als Erregerwicklungen ausgebildeten Verbraucher des elektronisch kommutierten Motors geschaltet und von der PWM-Steuereinheit ansteuerbar sind, wobei jedoch der Halbleiterschalter dieser Zusatzeinrichtung bei jeder Pulspause der PWM-Steuersignale die Speicherinduktivität einschaltet.

Bei einem elektronisch kommutierten Motor kann das Verfahren auch so ausgeführt sein, dass bei einem elektronisch kommutierten Motor jeder Halbleiter-Endstufe mit den als Erregerwicklung ausgebildeten Verbraucher eine eigene Zusatzeinrichtung mit Speicherkondensator und/oder Speicherinduktivität zugeordnet ist, deren Halbleiterschalter nur in den Pulspausen der der Halbleiter-Endstufe zugeführten PWM-Steuersignale den Ladestromkreis der zugeordneten Zusatzeinrichtung einschalten, wobei die Steuerung für den Ladestromkreis so erfolgt, dass jeder Halbleiter-Endstufe mit dem als Erregerwicklung ausgebildeten Verbraucher ein Speicherkondensator als eigene Zusatzeinrichtung zugeordnet ist, der über Dioden und die zugeordnete Halbleiter-Endstufe so schaltbar ist, dass er sich in den Pulspausen der zugeführten PWM-Steuersignale auflädt.

Die Erfindung wird anhand von verschiedenen, in den Zeichnungen dargestellten Ausführungsbeispielen näher erläutert. Es zeigen:
- Fig. 1: schematisch eine Zusatzeinrichtung mit einer Speicherinduktivität, die einem induktiven Verbraucher zugeordnet ist, der mit PWM-Steuersignalen erregt wird,
- Fig. 2: schematisch einen elektronisch kommutierten Motor, dem eine allen Halbleiter-Endstufen und Erregerwicklungen gemeinsame Zusatzeinrichtung zugeordnet ist,
- Fig. 3: schematisch einen elektronisch kommutierten Motor, bei dem jeder Halbleiter-Endstufe mit Erregerwicklung eine eigene Zusatzeinrichtung zugeordnet ist und
- Fig. 4: eine Schaltung, bei dem ein Speicherkondensator als Zusatzeinrichtung in den Ansteuerkreis des induktiven Verbrauchers einbezogen ist.

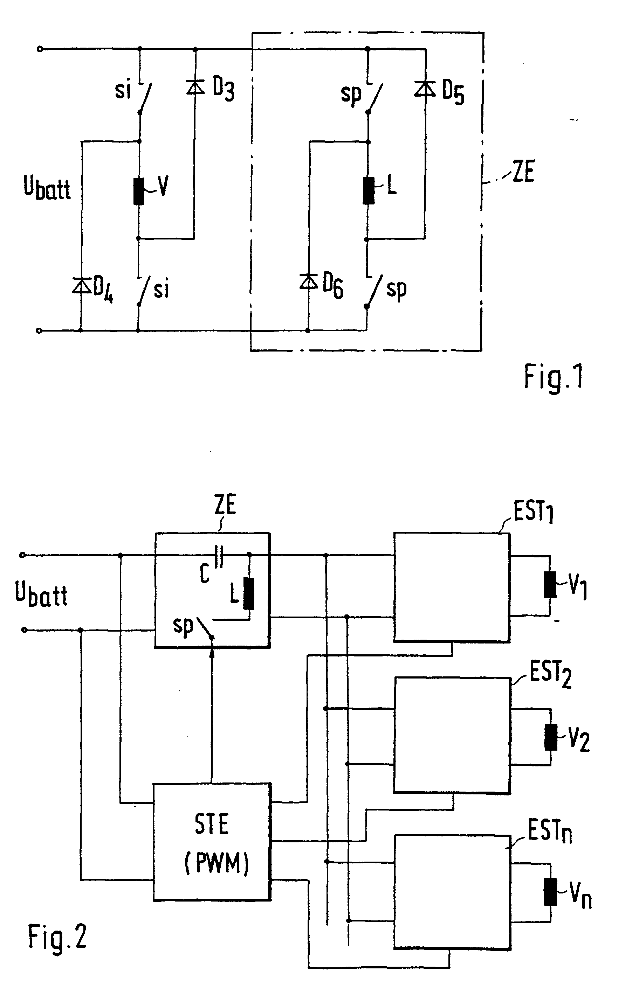

Wie Fig. 1 zeigt, wird mit Stellern si, die als Halbleiter-Endstufen ausgebildet sind, ein induktiver Verbraucher V mit Steuerimpulsen eines PWM-Steuersignals erregt, wobei über Dioden D₃ und D₄ in bekannter Weise in den Pulspausen die in dem Verbraucher V gespeicherte magnetische Energie abfließen kann und dabei kurzzeitig den Stromfluß im Verbraucher V aufrecht erhält. In den Pulspausen der PWM-Steuersignale entnimmt der Verbraucher V keinen Strom aus der Versorgungsgleichspannung U_{batt}. Dafür steuern als Halbleiterschalter ausgebildete Steller sp die Speicherinduktivität L in den Pulspausen in einen Ladestromkreis, der aus Versorgungsgleichspannung U_{batt} gespeist wird. Die Steller sp sind Teil der PWM-Steuereinheit und werden im Prinzip komplementär zu den Stellern si des Verbrauchers V geschaltet. Ist der Strombedarf für den Verbraucher V und die Speicherinduktivität L so aufeinander abgestimmt, dass der aus der Versorgungsgleichspannung U_{batt} aufgenommene Strom praktisch annähernd konstant ist, dann tritt auf der Versorgungsgleichspannung U_{batt} keine überlagerte Wechselspannung auf. Die Dioden D5 und D6 bilden einen Entladekreis für die in der Speicherinduktivität L bei ihrem Abschalten gespeicherte magnetische Energie. Ist der Verbraucher V eine Erregerwicklung eines elektronisch kommutierten Motors, dann nimmt die Speicherinduktivität L nicht an der Momentbildung des Motors teil, d.h. sie ist außerhalb des Motors angeordnet.

Weist ein elektronisch kommutierter Motor Erregerwicklungen V₁ bis Vₙ auf, dann werden diese über zugeordnete Halbleiter-Endstufen EST₁ bis ESTₙ als Steller nacheinander erregt, wobei eine elektronische Steuereinheit STE die Halbleiter-Endstufen EST₁ bis ESTₙ nacheinander ansteuert, wobei die Pulspausen der einzelnen, den Halbleiter-Endstufen EST₁ bis ESTₙ zugeführten PWM-Steuersignalen zeitlich gegeneinander versetzt sind. Daher muß die allen Halbleiter-Endstufen EST₁ bis ESTₙ mit den Erregerwicklungen als Verbraucher V₁ bis Vₙ gemeinsame Zusatzeinrichtungen ZE mit einem Speicherkondensator C und/oder einer Speicherinduktivität L über ihren Halbleiterschalter als Steller sp bei jeder Pulspause der von der Steuereinheit STE abgegebenen PWM-Steuersignale den Ladestromkreis zur Belastung der Versorgungsgleichspannung U_{batt} einschalten.

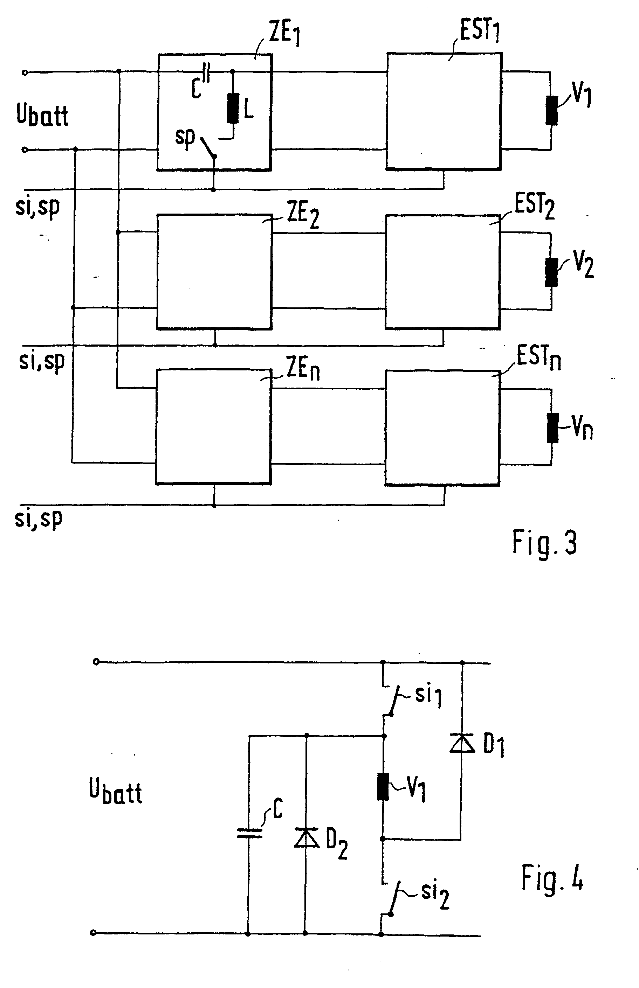

Wie das Ausführungsbeispiel nach Fig. 3 zeigt, kann bei einem elektronisch kommutierten Motor auch jeder Halbleiter-Endstufe EST₁ bis ESTₙ mit einer Erregerwicklung als Verbraucher V₁ bis Vₙ eine eigene Zusatzeinrichtung ZE₁ bis ZEₙ mit einem Speicherkondensator C und/oder einer Speicherinduktivität L zugeordnet werden. Die Steller sp dieser Zusatzeinrichtungen ZE₁ bis ZEₙ sind wieder als Halbleiterschalter ausgebildet und schalten komplementär zu den Stellern si der Steuereinheit STE für die Halbleiter-Endstufen EST₁ bis ESTₙ die Ladestromkreise der Zusatzeinrichtungen ZE₁ bis ZEₙ, so dass wiederum eine annähernd konstante Belastung der Versorgungsgleichspannung U_{batt} erreicht wird. Dabei kann, wie angedeutet, der Strom für die Halbleiter-Endstufen EST₁ bis ESTₙ und die Verbraucher V₁ bis V₂ über die zugeordneten Zusatzeinrichtungen ZE₁ bis ZEₙ geführt werden, die schließlich parallel an die Versorgungsspannung U_{batt} angeschlossen sind. Die Steller si für die Halbleiter-Endstufen EST₁ bis ESTₙ und die Steller sp für die Zusatzeinrichtungen ZE₁ bis ZEₙ sind in die Steuereinheit STE integriert.

Wie Fig. 4 zeigt, kann eine Speicherkapazität C direkt in den Schaltkreis für den Verbraucher V einbezogen werden. Der Verbraucher V ist über zwei als Halbleiterschalter si₁ und si₂ ausgebildeten Stellern mit der Versorgungsgleichspannung U_{batt} verbunden. Der Verbraucher V kann dabei eine Erregerwicklung eines elektronisch kommutierten Motors sein. Der Speicherkondensator C ist zwischen dem High-Side-Steller si₁ und dem Verbraucher V angeschaltet. Die Dioden D₁ und D₂ dienen als Entladestromkreis für die nach der Erregung gespeicherte magnetische Energie im Verbraucher V. In den Pulspausen kann der Speicherkondensator C geladen werden und bringt die gewünschte Belastung der Versorgungsgleich-spannung U_{batt}. Dabei muß der Low-Side-Steller si₂ geöffnet sein, was in den Pulspausen der Fall ist.

Die im Speicherkondensator C gespeicherte Energie kann zur Momentbildung über die Erregerwicklung verwendet werden, wenn am Ende der Steuerimpulse zuerst der High-Side-Steller si₁ geöffnet wird. Die in den Speicherkondensator C gespeicherte Energie erhält dann den Stromfluß über die Erregerwicklung kurzzeitig aufrecht. Pro Erregerwicklung ist daher nur ein Speicherkondensator C erforderlich, der mit seinem Ladestrom an den Stromverbrauch der Erregerwicklung angepaßt ist, um die Versorgungsgleichspannung U_{batt} während des Betriebes des Motors annähernd gleichmäßig zu belasten.

## Patentansprüche

1. Verfahren zum Ansteuern mindestens eines induktiven Verbrauchers mittels pulsweitenmodulierter Steuersignale einer PWM-Steuereinheit, wobei die Steuerimpulse der PWM-Steuersignale über eine Halbleiter-Endstufe den Verbraucher an eine Versorgungsgleichspannung anund abschalten und wobei
der PWM-Steuereinheit (STE) eine Zusatzeinrichtung (ZE) aus Speicherkondensator (C) und/oder Speicherinduktivität (L) mit einem Halbleiterschalter (si,sp) zugeordnet ist, dadurch gekenzeichnet,
dass der von der PWM-Steuereinheit (STE) gesteuerte Halbleiterschalter (si,sp) in den Pulspausen der PWM-Steuersignale einen von der Versorgungsgleichspannung (U_{batt}) gespeisten Ladestromkreis für den Speicherkondensator (C) und/oder die Speicherinduktivität (L) einschaltet.

2. Verfahren nach Anspruch 1,
**dadurch gekennzeichnet,**
**dass** sich der Ladestromkreis jeweils über den Anfang und das Ende der Pulspausen hinaus teilweise in die anschließenden Steuerimpulse erstreckt.

3. Verfahren nach Anspruch 1oder 2,
**dadurch gekennzeichnet,**
**dass** der Ladestromkreis einen Ladestrom aufnimmt, der an den Strom des Verbrauchers (V) so angepaßt wird, dass sich über den PWM-Betrieb ein annähernd gleichbleibender Strombedarf aus der Versorgungsspannung (U_{batt}) ergibt.

4. Verfahren nach einem der Ansprüche 1 bis 3,
**dadurch gekennzeichnet,**
**dass** bei einem elektronisch kommutierten Motor allen Halbleiter-Endstufen (EST₁ bis ESTₙ) mit den als Erregerwicklungen ausgebildeten Verbrauchern (V₁ bis Vₙ) eine gemeinsame Zusatzeinrichtung (ZE) mit einem Speicherkondensator (C) und/oder einer Speicherinduktivität (L) zugeordnet ist, dessen Halbleiterschalter (sp) in allen Pulspausen aller PWM-Steuersignale der PWM-Steuereinheit (STE) den Ladestromkreis einschaltet (Fig. 2).

5. Verfahren nach einem der Ansprüche 1 bis 3,
**dadurch gekennzeichnet,**
**dass** bei einem elektronisch kommutierten Motor jeder Halbleiter-Endstufe (EST₁ bis ESTₙ) mit den als Erregerwicklung ausgebildeten Verbraucher (V₁ bis Vₙ) eine eigene Zusatzeinrichtung (ZE₁ bis ZEₙ) mit Speicherkondensator (C) und/oder Speicherinduktivität (L) zugeordnet ist, deren Halbleiterschalter (Sp) nur in den Pulspausen der der Halbleiter-Endstufe (EST₁ bis ESTₙ) zugerührten PWM-Steuersignale den Ladestromkreis der zugeordneten Zusatzeinrichtung (ZE₁ bis ZEₙ) einschalten (Fig. 3).

6. Verfahren nach Anspruch 4,
**dadurch gekennzeichnet,**
**dass** die gemeinsame Zusatzeinrichtung (ZE) eine Speicherinduktivität (L) aufweist, die wie die Halbleiter-Endstufen (EST₁ bis ESTₙ) und die als Erregerwicklung ausgebildeten Verbraucher (V₁ bis Vₙ) des elektronisch kommutierbaren Motors geschaltet und von der PWM-Steuereinheit (STE) ansteuerbar sind, wobei jedoch der Halbleiterschalter (sp) dieser Zusatzeinrichtung (ZE) bei jeder Pulspause der PWM-Steuersignale die Speicherinduktivität (L) einschaltet (Fig. 1 und 2).

7. Verfahren nach Anspruch 5,
**dadurch gekennzeichnet,**
**dass** jeder Halbleiter-Endstufe (EST₁ bis ESTₙ) mit dem als Erregerwicklung ausgebildeten Verbraucher (V₁ bis Vₙ) ein Speicherkondensator (C) als eigene Zusatzeinrichtung (ZE) zugeordnet ist, der über Dioden (D₁, D₂) und die zugeordnete Halbleiter-Endstufe (Si1, Si2) so schaltbar ist, dass er sich in den Pulspausen der zugeführten PWM-Steuersignale auflädt (Fig. 3 und 4).

## Claims

1. Method for driving at least one inductive load by means of pulse-width-modulated control signals of a PWM control unit, the control pulses of the PWM control signals connecting and disconnecting the load to and from a DC supply voltage via a semiconductor output stage, and the PWM control unit (STE) being assigned an additional device (ZE) comprising storage capacitor (C) and/or storage inductance (L) with a semiconductor switch (si,sp), **characterized in that**, in the pulse intervals of the PWM control signals, the semiconductor switch (si,sp) controlled by the PWM control unit (STE) switches on a charging circuit, fed by the DC supply voltage (U_{batt}), for the storage capacitor (C) and/or the storage inductance (L).

2. Method according to Claim 1,
**characterized**
**in that** the charging circuit in each case extends beyond the start and the end of the pulse intervals partly into the subsequent control pulses.

3. Method according to Claim 1 or 2,
**characterized**
**in that** the charging circuit takes up a charging current which is adapted to the current of the load (V) in such a way as to result in an approximately uniform current demand from the supply voltage (U_{batt}) over the PWM operation.

4. Method according to one of Claims 1 to 3,
**characterized**
**in that**, in the case of an electronically commutated motor, all the semiconductor output stages (EST₁ to ESTₙ) with the loads (V₁ to Vₙ) designed as exciter windings are assigned a common additional device (ZE) with a storage capacitor (C) and/or a storage inductance (L), whose semiconductor switch (sp) switches on the charging circuit in all the pulse intervals of all the PWM control signals of the PWM control unit (STE) (Fig. 2).

5. Method according to one of Claims 1 to 3,
**characterized**
**in that**, in the case of an electronically commutated motor, each semiconductor output stage (EST₁ to ESTₙ) with the load (V₁ to Vₙ) designed as an exciter winding is assigned a dedicated additional device (ZE₁ to ZEₙ) with storage capacitor (C) and/or storage inductance (L), whose semiconductor switches (sp) switch on the charging circuit of the assigned additional device (ZE₁ to ZEₙ) only in the pulse intervals of the PWM control signals fed to the semiconductor output stage (EST₁ to ESTₙ) (Fig. 3).

6. Method according to Claim 4,
**characterized**
**in that** the common additional device (ZE) has a storage inductance (L) which is switched like the semiconductor output stages (EST₁ to ESTₙ) and the loads (V₁ to Vₙ)- designed as exciter winding - of the electronically commutatable motor and can be driven by the PWM control unit (STE), but the semiconductor switch (sp) of this additional device (ZE) switches on the storage inductance (L) upon each pulse interval of the PWM control signals (Figures 1 and 2).

7. Method according to Claim 5,
**characterized**
**in that** each semiconductor output stage (EST₁ to ESTₙ) with the load (V₁ to Vₙ) designed as an exciter winding is assigned a storage capacitor (C) as dedicated additional device (ZE), which can be switched via diodes (D₁, D₂) and the assigned semiconductor output stage (Si1, Si2) in such a way that it is charged in the pulse intervals of the PWM control signals that are fed (Figures 3 and 4).

## Revendications

1. Procédé d'amorçage d'au moins un consommateur inductif à l'aide de signaux de commande modulés en largeur d'impulsion d'un module de commande de modulation d'impulsions en largeur, les impulsions de commande des signaux de commande de la modulation d'impulsions en largeur connectant et déconnectant le consommateur à une tension continue d'alimentation via un transformateur de sortie semi-conducteur et un dispositif additionnel (ZE) composé d'un condensateur de stockage (C) et/ou d'une inductance de stockage (L), avec un interrupteur semi-conducteur (si, sp) étant associé au module de commande de modulation d'impulsions en largeur (STE),
**caractérisé en ce que**
l'interrupteur semi-conducteur (si, sp) commandé par le module de commande de modulation d'impulsions en largeur (STE) enclenche, dans les pauses d'impulsions des signaux de commande de modulation d'impulsions en largeur, un circuit de courant de charge alimenté par la tension continue d'alimentation (U_{batt}) pour le condensateur de stockage (C) et/ou l'inductance de stockage (L).

2. Procédé selon la revendication 1,
**caractérisé en ce qu'**
au début et à la fin des pauses d'impulsion, le circuit de courant de charge se prolonge partiellement dans les impulsions de commande suivantes.

3. Procédé selon la revendication 1 ou 2,
**caractérisé en ce que**
le circuit de courant de charge absorbe un courant de charge qui est adapté au courant du consommateur (V) de manière à ce que le besoin en courant de la tension d'alimentation (U_{batt}) reste quasi-constant pendant le fonctionnement de la modulation d'impulsions en largeur.

4. Procédé selon l'une des revendications 1 à 3,
**caractérisé en ce que**
dans le cas d'un moteur à commutation électrique, un dispositif spécial (ZE) commun composé d'une part d'un condensateur de stockage (C) et/ou d'une inductance de stockage (L) et d'autre part de consommateurs (V₁ à V₀) servant d'enroulements inducteurs est associé à tous les transformateurs de sortie semi-conducteurs (EST₁ à EST₀), dont l'interrupteur semi-conducteur (sp) enclenche le circuit de courant de charge dans toutes les pauses d'impulsions de commande de l'intégralité des signaux de commande de modulation d'impulsions en largeur du module de commande de modulation d'impulsions en largeur (STE) (fig. 2).

5. Procédé selon l'une des revendications 1 à 3,
**caractérisé en ce que**
dans le cas d'un moteur à commutation électrique, un dispositif spécial (ZE₁ à ZE₀) individuel composé d'une part d'un condensateur de stockage (C) et/ou d'une inductance de stockage (L) et d'autre part de consommateurs (V₁ à V₀) servant d'enroulements inducteurs est associé à tous les transformateurs de sortie semi-conducteurs (EST₁ à EST₀), dont les interrupteurs semi-conducteurs (Sp) n'activent le circuit de courant de charge du dispositif additionnel associé (ZE₁ à ZE₀) que dans les pauses d'impulsions des signaux de commande de modulation d'impulsions en largeur en contact avec le transformateur de sortie semi-conducteur (EST₁ à EST₀) (fig. 3).

6. Procédé selon la revendication 4,
**caractérisé en ce que**
le dispositif additionnel commun (ZE) présente une inductance de stockage (L) qui est activée comme les transformateurs de sortie semi-conducteurs (EST₁ à EST₀) et les consommateurs (V₁ à V₀) du moteur à commutation électronique servant d'enroulement inducteur et est amorcée par le module de commande de modulation d'impulsions en largeur (STE), l'interrupteur semi-conducteur (sp) de ce dispositif additionnel (ZE) activant néanmoins l'inductance de stockage (L) à chaque pause d'impulsion des signaux de commande de modulation d'impulsions en largeur.

7. Procédé selon la revendication 5,
**caractérisé en ce qu'**
un condensateur de stockage (C) servant de dispositif additionnel individuel (ZE) est associé à chaque transformateur de sortie semi-conducteur (EST₁ à EST₀) avec le consommateur (V₁ à V₀) servant d'enroulement inducteur, le condensateur de stockage pouvant être activé via les diodes (D₁, D₂) et le transformateur de sortie semi-conducteur associé (Si1, Si2), de manière à se recharger pendant les pauses d'impulsion des signaux de commande de modulation d'impulsions en largeur fournis (fig. 3 et 4).
